# FASCICULE DE BREVET EUROPEEN

(11) **EP 0 886 739 B1**
(45) Date de publication et mention de la délivrance du brevet: **24.10.2001**
(21) Numéro de dépôt: 97914373.2
(22) Date de dépôt: 12.03.1997
(51) Int. Cl.: F16K 1/22, F02D 9/10, F16B 21/16, F16C 25/02

(54) **VANNE PAPILLON**
KLAPPE
BUTTERFLY VALVE

(30) Priorité: 18.03.1996 FR 9603336
(43) Date de publication de la demande: 30.12.1998
(73) Titulaire: MAGNETI MARELLI FRANCE, 92002 Nanterre Cédex (FR)
(72) Inventeur: PAJARD, Claude, F-95240 Cormeilles-en-Parisis (FR)
(74) Mandataire: Bérogin, Francis
(86) Numéro de dépôt international: FR9700433
(87) Numéro de publication internationale: WO9735131

(56) Documents cités:
- DE-A- 3 924 611
- DE-A- 4 240 783
- FR-A- 2 606 115
- GB-A- 2 042 124
- GB-A- 2 181 820
- US-A- 2 471 180
- US-A- 3 726 575
- US-A- 4 659 064
- US-A- 4 846 441

## Description

L'invention concerne les dispositifs de dosage de débit de gaz, tels que ceux dénommés corps papillon, pour le dosage d'air comburant d'alimentation de moteurs à combustion interne ou à explosion, ou encore corps doseur, pour le dosage de gaz d'échappement recirculés.

Par US-A-4,846,441, on connaît une vanne, utilisable comme dispositif de dosage de débit de fluide, et du type comprenant un corps traversé d'au moins un conduit dans lequel un organe d'étranglement, sensiblement en forme de disque, et généralement dénommé papillon, est monté rotatif avec un axe transversal audit conduit et tourillonnant dans le corps de part et d'autre du conduit, et dont une partie d'extrémité est logée dans une chambre ménagée dans le corps d'un côté dudit conduit et s'ouvrant latéralement vers l'extérieur du corps, ladite partie d'extrémité de l'axe présentant au moins un évidement, délimité par un épaulement ou une gorge, dans lequel est engagée, sensiblement tangentiellement à l'axe, au moins une dent assurant un blocage axial de l'axe dans le corps en étant retenue sur le corps par un organe de blocage maintenu positionné dans ladite chambre à l'aide d'un bouchon de fermeture de ladite chambre.

Dans US-A-4,846,441, l'axe est constitué de deux parties d'axe séparées, dont chacune tourillonne dans l'un respectivement de deux paliers latéraux du corps et a son extrémité axiale externe logée dans l'une respectivement de deux chambres du corps s'ouvrant latéralement vers l'extérieur de ce dernier, chaque partie d'axe étant fixée à l'organe d'étranglement par des vis radiales.

Deux dents, qui sont des tiges cylindriques, sont introduites indépendamment l'une de l'autre et tangentiellement dans la gorge annulaire de l'une au moins des parties d'axes et dans des logements rectilignes transversaux et parallèles de l'organe de blocage, qui est un manchon entourant l'extrémité de la partie d'axe présentant la gorge et engagé dans la chambre latérale correspondante du corps, de sorte à retenir les tiges cylindriques bloquant axialement la partie d'axe. Dans cette chambre du corps, le positionnement axial du manchon est assuré par vissage ou dévissage d'un bouchon fileté, vissé dans cette chambre, sans venir en butée axiale contre le corps, afin de régler la position axiale de l'axe dans le corps, et donc celle de l'organe d'étranglement dans le conduit, pour permettre sa rotation dans ce dernier.

Le montage de la vanne et le réglage axial des parties d'axe et de l'organe d'étranglement sont longs et complexes : chaque partie d'axe présentant une gorge est introduite dans le manchon correspondant, puis les tiges cylindriques formant dents de blocage axial de la partie d'axe correspondante sont montées dans la gorge et dans le manchon, et le sous-ensemble obtenu est ensuite monté dans son palier sur le corps et relié à ce corps par vissage du bouchon fileté, et chaque partie d'arbre est ensuite fixée à l'organe d'étranglement par vissage. Enfin, l'organe d'étranglement est centré par rapport au conduit du corps par rotation du bouchon fileté, puis immobilisation de ce bouchon en position par rapport au corps lorsque la position axiale souhaitée a été obtenue.

Un tel dispositif a pour inconvénients d'être d'une structure, d'un montage et d'un réglage qui sont complexes et coûteux, et qui supposent des accessibilités que l'on ne peut prévoir dans des corps papillon ou corps doseur pour dosage de débit de gaz tel que de l'air comburant ou des gaz d'échappement recirculés, que l'invention se propose précisément de perfectionner.

Le problème à la base de l'invention est de remédier aux inconvénients des dispositifs connus du type précité, et de proposer un dispositif perfectionné convenant mieux que ceux connus aux diverses exigences de la pratique, en particulier dans ses applications au dosage de débit d'air comburant d'alimentation d'un moteur à combustion interne ou de gaz d'échappement recirculés.

Un but de l'invention est de proposer un dispositif de dosage de ce type, dans lequel des moyens simples et économiques permettent le montage, sans vissage, des dents et de l'organe de blocage et de l'axe, dans leur bonne position de coopération, permettant la rotation de l'organe d'étranglement dans le conduit du corps, dès que le bouchon occupe une unique position de montage sur le corps, dans laquelle ce bouchon est directement fixé en appui contre une butée axiale du corps, en fermant la chambre latérale du corps dans laquelle le bouchon pénètre et les dents de blocage sont engagées dans une bonne position de coopération avec l'évidement de l'axe.

Les perfectionnements qui font plus particulièrement l'objet de la présente invention concernent la réalisation d'un organe de blocage particulier, ainsi que son montage dans le corps, et la réalisation de ce dernier et de l'axe d'une manière appropriée à la coopération avec cet organe de blocage, de sorte à simplifier la structure du dispositif de dosage et à rendre plus rapide son montage dans la position optimale de coopération de la ou des dents avec l'évidement de l'axe, sans réglage particulier, pour obtenir un dispositif de dosage plus économique que ceux actuellement utilisés.

En outre, dans les dispositifs de dosage de gaz connus, l'autre partie d'extrémité de l'axe, de l'autre côté du conduit et de l'organe d'étranglement monté dans ce dernier, est généralement logée dans une autre chambre s'ouvrant latéralement vers l'extérieur du corps, dans une excroissance latérale de ce dernier, et logeant non seulement cette autre partie d'extrémité de l'axe, mais également, et au moins partiellement, des moyens d'entraînement en rotation de l'axe et de l'organe d'étranglement. Ces moyens d'entraînement logés dans cette autre chambre peuvent être un embiellage d'une transmission reliant un actionneur, monté latéralement sur l'extérieur du corps, à l'axe, ou encore directement une partie d'un tel actionneur, qui peut être de tout type approprié, par exemple un actionneur à course rotative ou linéaire, à membrane et à crémaillère coopérant avec une denture sur l'axe, ou à système vis-écrou à transformation du mouvement linéaire de l'actionneur en rotation de l'axe et de l'organe d'étranglement.

Après mise en place de l'axe dans le corps et de l'organe de blocage sur le corps et dans l'évidement ou la gorge de l'axe, l'ouverture de l'autre chambre du corps vers l'extérieur est obturée par un autre bouchon rapporté sur le corps de manière démontable ou indémontable.

Ces dispositifs de dosage de gaz connus ont pour inconvénient supplémentaire que leur structure doit comporter deux chambres, disposées de part et d'autre du conduit en général dans des excroissances latérales du corps, et chacune ouverte latéralement vers l'extérieur du corps pour permettre des opérations de montage, de centrage et d'ajustement dans chacune des chambres, afin d'assurer la coopération de l'axe avec ses moyens d'entraînement en rotation, d'une part, et, d'autre part, avec l'organe de blocage. Puis les deux chambres doivent être obturées.

Il en résulte une structure complexe, nécessitant différents usinages, dans le cas d'un corps métallique, ou des opérations de moulage avec plusieurs noyaux, dans le cas d'un corps moulé en une matière de synthèse, ainsi que des opérations de montage relativement longues et délicates sur les deux parties d'extrémité de l'axe, sur lequel l'organe d'étranglement, ou papillon, est ensuite fixé.

Un autre but de l'invention est de proposer un tel dispositif de dosage muni d'un organe de blocage dont 1a structure permet une mise en place aisée des dents de blocage dans l'évidement ou la gorge de l'axe et une implantation avantageuse dans le corps de sorte à simplifier la réalisation au moins du corps et de l'axe du dispositif et de diminuer ses temps de montage, pour qu'il soit plus économique.

A cet effet, le dispositif de dosage selon l'invention, du type présenté ci-dessus, se caractérise en ce que ledit organe de blocage est une fourchette d'une seule pièce avec chaque dent, et ladite fourchette et ledit bouchon sont également d'une seule pièce présentant une portion de centrage, s'engageant axialement dans ladite chambre, et au moins une partie radiale d'appui contre une surface de butée axiale correspondante du corps, pour limiter l'engagement axial de ladite portion de centrage dans ladite chambre dans la position de coopération de chaque dent de ladite fourchette dans ledit évidement de l'axe avec un faible jeu axial autorisant la libre rotation de l'organe d'étranglement dans le conduit.

Une telle fourchette est d'une réalisation aisée, et peut facilement être mise en place sur l'axe par un déplacement sensiblement radial par rapport à ce dernier, de sorte qu'au moins une dent soit engagée dans l'évidement alors que la partie d'extrémité de l'axe qui présente cet évidement est maintenue temporairement accessible à l'extérieur du corps par un déplacement axial limité de l'axe par rapport à sa position définitive dans le corps, puis un déplacement axial de l'axe et de la fourchette et du bouchon vers l'intérieur du corps, jusqu'à la position d'appui axial du bouchon contre le corps, permet d'atteindre la position correcte recherchée.

Avantageusement, pour assurer une meilleure retenue axiale, tout en procurant de manière précise le faible jeu axial nécessaire, la fourchette comprend deux dents sensiblement parallèles l'une à l'autre et engagées dans des parties sensiblement diamétralement opposées de l'évidement, réalisé sous la forme d'une gorge de l'axe.

Pour améliorer encore la retenue axiale de l'axe à l'aide d'une fourchette de résistance améliorée et/ou dont les dents sont moins sollicitées, les dents de la fourchette sont avantageusement portées en saillie d'un même côté d'une partie arrondie sensiblement en demi-cercle de ladite fourchette, ladite partie arrondie étant également engagée dans ladite gorge de l'axe.

De plus, la chambre logeant la partie d'extrémité de l'axe présentant l'évidement ou la gorge peut également loger, au moins partiellement, des moyens d'entraînement en rotation de l'organe d'étranglement et de l'axe, lequel est avantageusement d'une seule pièce et traverse le conduit.

Cette réalisation présente l'avantage que l'évidement ou la gorge, la fourchette de blocage axial de l'axe et des moyens d'entraînement en rotation de ce dernier sont logés dans une même chambre du corps, d'un même côté du conduit, et que cette chambre peut être fermée par un unique bouchon, tandis que la partie d'extrémité opposée de l'axe peut être montée tourillonnante dans un alésage borgne réalisé dans une partie latérale du corps, et qui peut être venu de moulage lorsque le corps est par exemple moulé d'une seule pièce en une matière de synthèse.

Dans un mode de réalisation simplifié, ladite fourchette est en saillie sur une face radiale interne de ladite portion de centrage, aménagée en tronc de cylindre engagé axialement dans un alésage cylindrique correspondant délimitant partiellement ladite chambre, ledit tronc de cylindre étant lui-même en saillie sur une face radiale interne d'un bouchon cylindrique de plus grand diamètre en appui axial, par sa face radiale interne, contre une butée annulaire du corps, autour de l'entrée de ladite chambre.

Dans cette réalisation, la pièce unique constituant le bouchon et la fourchette peut être avantageusement moulée en matière de synthèse.

Dans le cas où les moyens d'entraînement en rotation ou de manoeuvre de l'axe et de l'organe d'étranglement comprennent un actionneur à course rectiligne, par exemple à membrane, il est en outre avantageux que ledit évidement ou ladite gorge de l'axe soit réalisé(e) sur ladite partie d'extrémité axialement à l'extérieur d'un secteur denté et d'une butée de rotation portés par l'axe pour coopérer respectivement avec une crémaillère desdits moyens d'entraînement en rotation, et avec une butée du corps, pour limiter la rotation de l'organe d'étranglement en position maximum d'ouverture du conduit, la dimension axiale des dents du secteur denté étant telle que lesdites dents restent en prise avec ladite crémaillère tout en permettant une sortie axiale de ladite partie d'extrémité de l'axe hors de ladite chambre qui est suffisante pour la mise en place de ladite fourchette dans ledit évidement ou ladite gorge de l'axe.

Le bouchon peut être fixé sur le corps par des moyens indémontables, tels que soudage ou déformation de matière, tel que sertissage, ou encore par des moyens démontables, tels qu'au moins une oreille radiale du bouchon vissée sur le corps. Des moyens indémontables de fixation ne nécessitent pas d'orientation angulaire préalable et particulière de l'axe et, par exemple, du secteur denté qu'il peut porter pour s'engager en position de coopération avec la crémaillère de l'actionneur d'entraînement, alors qu'au contraire des moyens démontables de fixation du bouchon peuvent rendre nécessaire une telle opération préalable d'orientation angulaire.

Enfin, le dispositif de dosage a pour avantage que les différentes mesures techniques présentées ci-dessus sont compatibles avec un corps et/ou un axe qui est ou sont moulé(s) d'une seule pièce en une matière de synthèse.

D'autres avantages et caractéristiques de l'invention ressortiront de la description donnée ci-dessous, à titre non limitatif, d'un exemple de réalisation décrit en référence aux dessins annexés sur lesquels :
- la figure 1 est une vue en perspective d'un dispositif de dosage, dont une partie, au niveau de la fourchette coopérant avec l'axe, a été représentée partiellement en coupe axiale et partiellement en élévation latérale,
- la figure 2 représente partiellement et en élévation latérale le dispositif de dosage de la figure 1, dont l'axe est partiellement ressorti pour la mise en place du bouchon avec fourchette de blocage, et
- la figure 3 représente partiellement en perspective la partie d'extrémité de l'axe présentant une gorge dans laquelle est montée la fourchette du bouchon.

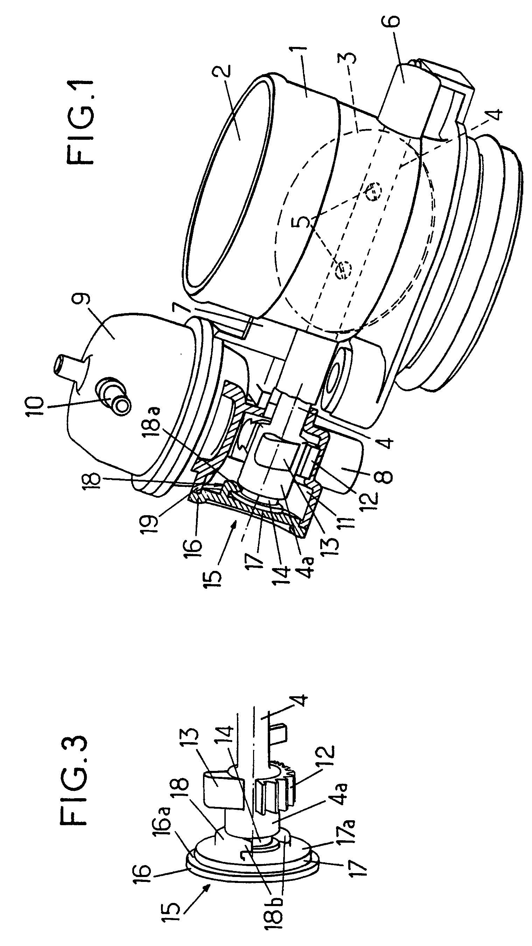

Sur la figure 1, on a représenté en 1 une partie centrale tubulaire, de forme générale cylindrique, d'un corps de doseur traversé d'un conduit 2, destiné au passage d'un gaz, dont le débit doit être dosé par le réglage de la position angulaire, dans le conduit 2, d'un organe d'étranglement 3, en forme de disque, appelé papillon, et représenté en traits mixtes sur la figure 1. De manière connue, le papillon 3 est introduit dans une fente diamétrale d'un axe 4 sur lequel le papillon 3 est fixé par deux vis 5.

L'axe 4 est un axe transversal au corps 1 et au conduit 2 qui est, par exemple, cylindrique et que l'axe 4 traverse diamétralement en étant monté tourillonnant, de part et d'autre du conduit 2, dans des paliers du corps 1.

L'un des paliers est formé par la paroi d'un alésage borgne (non représenté sur la figure 1) réalisé dans une petite partie latérale 6 du corps 1, tandis que l'autre palier 7 est aménagé dans une portion reliant au corps 1 une seconde partie latérale 8, solidaire du corps 1 et sensiblement diamétralement opposée par rapport à la petite partie 6.

La partie latérale 8 du corps 1 supporte un actionneur, dont le capot est représenté en 9, pour entraîner en rotation l'ensemble constitué de l'axe 4 et du papillon 3. Cet actionneur est par exemple un actionneur à membrane délimitant, à l'intérieur de son capot 9, deux chambres dont l'une est alimentée en gaz sous pression ou mise en communication avec une source de dépression par un embout 10, les déplacements de la membrane étant transmis, de manière connue, à une crémaillère (non visible sur les figures) qui est déplacée en va-et-vient sur une trajectoire rectiligne dans la partie latérale 8 du corps 1.

Cette partie latérale 8 présente également une chambre interne 11, qui s'ouvre latéralement à l'extérieur du corps 1, du côté opposé au conduit 2.

Cette chambre 11 loge la partie d'extrémité 4a de l'axe 4, qui est opposée à celle tourillonnant dans l'alésage borgne de la petite partie latérale 6, et qui, comme représenté sur la figure 3, est d'un diamètre supérieur à celui du reste de l'axe 4 et porte, sensiblement dans une même partie axiale, un secteur denté 12 à dents axiales en saillie radialement vers l'extérieur de l'axe 4, pour coopérer, dans une partie latérale de la chambre 11 à l'intérieur de la partie 8 du corps 1, avec la crémaillère, déplaçable dans cette partie latérale 8, de l'actionneur de manoeuvre, ainsi qu'une butée de rotation 13, destinée à venir en appui contre une butée du corps 1, en saillie dans la chambre 11, pour limiter la rotation de l'axe 4 et du papillon 3 dans une position angulaire du papillon 3 dans le conduit 2 correspondant à une ouverture maximum de ce conduit 2.

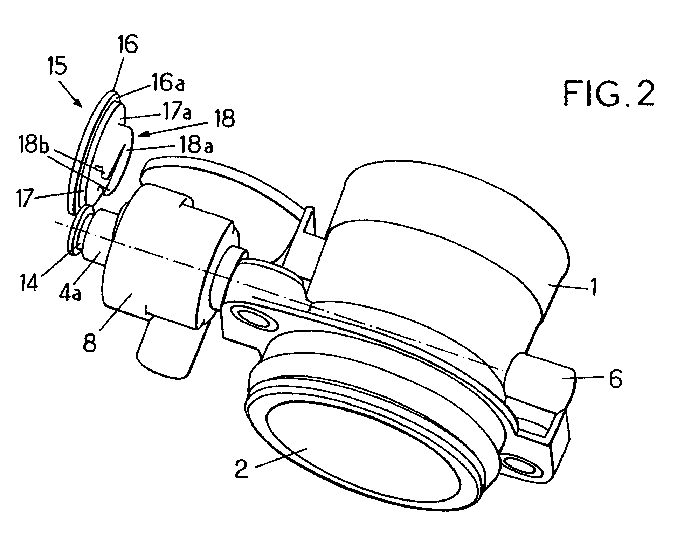

La partie d'extrémité 4a de l'axe 4 présente également, à proximité de son extrémité, c'est-à-dire axialement à l'extérieur du secteur denté 12 et de la butée de rotation 13, un évidement périphérique sous la forme d'une gorge annulaire 14 représentée sur les figures 1 et 2 et partiellement visible sur la figure 3.

L'ouverture de la chambre 11 vers l'extérieur de la partie latérale 8 du corps 1 est fermée par un bouchon 15, qui comprend un disque ou anneau externe 16, en tronc de cylindre de grand diamètre, sur la face radiale interne 16a duquel fait saillie un disque interne 17 en tronc de cylindre coaxial à l'anneau 16 mais de plus petit diamètre que ce dernier. A son tour, sur la face radiale interne 17a du disque interne 17 fait saillie une fourchette 18.

Cette fourchette 18 présente une partie centrale arrondie 18a en saillie radialement, c'est-à-dire perpendiculairement à l'axe commun à l'anneau externe 16 et au disque interne 17, et cette partie centrale arrondie 18a, de forme concave de façon à s'engager dans la gorge 14 de l'axe 4 et autour d'une partie inférieure à une demi-circonférence du fond de cette gorge 14, se prolonge, à ses deux extrémités en direction circonférentielle, par deux dents 18b sensiblement parallèles l'une à l'autre et également orientées perpendiculairement à l'axe commun à l'anneau 16 et au disque 17. Ainsi, lorsque la partie centrale 18a de la fourchette 18 est engagée dans la gorge 14, les deux dents 18b de la fourchette 18 sont également engagées dans la gorge 14, chacune sensiblement tangentiellement dans l'une respectivement de deux parties sensiblement diamétralement opposées de cette gorge 14. Les deux dents 18b de la fourchette 18 sont portées en saillie, perpendiculairement à l'axe commun aux disques 16 et 17, d'un même côté de la partie centrale arrondie 18a s'étendant sensiblement sur un demi-cercle centré sur cet axe commun aux disques 16 et 17.

En position de fermeture de la chambre 11, le bouchon 15 est fixé sur la partie latérale 8 du corps 1, en étant en appui par la face radiale interne 16a de son anneau externe 16 contre une surface de butée axiale constituée sur la partie 8 du corps 1 par la surface de butée annulaire 19 entourant l'alésage cylindrique délimitant l'entrée de la chambre 11. L'appui de l'anneau 16 contre la butée axiale annulaire 19 du corps 1 limite l'engagement axial du disque interne 17 du bouchon 15 dans l'alésage d'entrée de la chambre 11, dans lequel le bouchon 15 est centré par son disque interne 17. Cet engagement axial du disque de centrage 17 dans la chambre 11 est limité par l'anneau externe 16 dans la position de coopération de la fourchette 18 avec la gorge 14 de l'axe 4, et, par construction, la largeur, en direction axiale, des dents 18b et de la partie centrale arrondie 18a de la fourchette 18 est inférieure à la dimension axiale de la gorge 14 pour que la fourchette 18 assure le blocage axial de l'axe 4 avec un faible jeu axial nécessaire au positionnement du papillon 3 dans le conduit 2 de sorte que le papillon puisse librement tourner avec l'axe 4 dans ce conduit 2. Ainsi, la fourchette 18 est maintenue positionnée dans la chambre 11, en position de coopération avec la gorge 14, grâce au bouchon 15 de fermeture de cette chambre 11 et avec lequel la fourchette 18 est d'une seule pièce.

Au montage du dispositif, avant introduction du papillon 3 dans le conduit 2 et fixation du papillon 3 sur l'axe 4, cet axe 4 est engagé axialement dans la chambre 11 et monté dans le palier 7 et le palier de l'alésage borgne de la partie latérale 6 du corps 1, en procédant à une indexation nécessaire en position angulaire pour amener les dents de son secteur denté 12 en prise avec la crémaillère de l'actionneur de manoeuvre, dans une position angulaire convenable. La dimension axiale des dents du secteur denté 12 est telle que ses dents restent en prise avec la crémaillère tout en permettant une sortie axiale de la partie d'extrémité 4a de l'axe 4 hors de la chambre 11 qui est suffisante, comme représenté sur la figure 2, pour dégager la gorge 14 et la rendre accessible pour l'engagement des dents 18b et de la partie centrale arrondie 18a de la fourchette 18 dans cette gorge 14, par un déplacement d'ensemble sensiblement radial du bouchon 15.

Après mise en place de la fourchette 18 dans la gorge 14 de l'axe 4, le bouchon 15 occupe par rapport à la partie d'extrémité 4a correspondante de l'axe 4 la position représentée sur la figure 3. L'ensemble de l'axe 4 et du bouchon 15 monté sur ce dernier est ensuite déplacé axialement dans la position de la figure 1, et le bouchon 15 est retenu sur le corps 1 en maintenant son anneau externe 16 en appui axial contre la butée annulaire 19 de la partie 8 du corps 1 par des moyens de fixation du bouchon 15 sur le corps 1.

Ces moyens de fixation sont choisis en fonction du matériau constitutif du corps 1 et du bouchon 15.

Lorsque le corps 1 et le bouchon 15 sont en métal, par exemple en alliage d'aluminium, l'anneau 16 du bouchon 15 peut être retenu par sertissage ou repoussage de matière dans un chambrage de la partie latérale 8 du corps 1, autour de la butée axiale annulaire 19, de manière indémontable, ou encore l'anneau 16 du bouchon 15 peut présenter une ou plusieurs oreilles radiales fixées sur la partie latérale 8 du corps 1 par des vis, de manière démontable.

Si le corps 1 ainsi que le bouchon 15 avec la fourchette 18 sont chacun moulés d'une seule pièce en une matière de synthèse, le bouchon 15 peut être fixé de manière indémontable au corps 1 par exemple par soudure aux ultrasons ou par vibrations de l'anneau ou disque 16 sur la partie 8.

Les modes de fixation indémontables ont l'avantage de ne pas nécessiter de positionnement angulaire particulier du bouchon 15 par rapport au corps 1. Par contre, une réalisation d'un bouchon 15 avec des oreilles de fixation par vissage sur le corps 1 nécessite un tel positionnement angulaire du bouchon 15.

Il est à noter que l'axe 4 peut être également moulé d'une seule pièce en une matière de synthèse avec sa gorge 14, son secteur denté 12 et sa butée de rotation 13.

La structure du dispositif décrit présente l'avantage que chacun de ses trois éléments constitutifs essentiels peut être moulé d'une seule pièce en une matière plastique. De plus, toutes les opérations d'assemblage, de centrage et de fixation sont concentrées dans la partie latérale 8 du corps 1 et dans la chambre 11 de cette partie 8. Il en résulte un gain sur les temps de montage de l'axe dans la position de la figure 1, dans laquelle le papillon 3 peut ensuite être fixé sur l'axe 4, de manière traditionnelle.

## Revendications

1. Dispositif de dosage de débit de gaz, notamment d'air comburant d'alimentation d'un moteur à explosion ou de gaz d'échappement recirculés, du type comprenant un corps (1) traversé d'au moins un conduit (2) dans lequel un organe d'étranglement (3), sensiblement en forme de disque, est monté rotatif avec un axe (4) transversal audit conduit (2) et tourillonnant dans le corps (1) de part et d'autre du conduit (2), et dont une partie d'extrémité (4a) est logée dans une chambre (11) ménagée dans le corps (1) d'un côté dudit conduit (2) et s'ouvrant latéralement vers l'extérieur du corps (1), ladite partie d'extrémité (4a) de l'axe (4) présentant au moins un évidement (14), délimité par un épaulement ou une gorge, dans lequel est engagée, sensiblement tangentiellement à l'axe (4) au moins une dent (18b) assurant un blocage axial de l'axe (4) dans le corps (1) en étant retenue sur le corps (1) par un organe de blocage (18) maintenu positionné dans ladite chambre (11) à l'aide d'un bouchon (15) de fermeture de ladite chambre (11), **caractérisé en ce que** ledit organe de blocage est une fourchette (18) d'une seule pièce avec chaque dent (18b), et ladite fourchette (18) et ledit bouchon (15) sont également d'une seule pièce présentant une portion de centrage (17), s'engageant axialement dans ladite chambre (11), et au moins une partie radiale (16a) d'appui contre une surface de butée axiale (19) correspondante du corps (1), pour limiter l'engagement axial de ladite portion de centrage (17) dans ladite chambre (11) dans la position de coopération de chaque dent de ladite fourchette (18) dans ledit évidement (14) de l'axe (4) avec un faible jeu axial autorisant la libre rotation de l'organe d'étranglement (3) dans le conduit (2).

2. Dispositif de dosage selon la revendication 1, **caractérisé en ce que** ladite fourchette (18) est en saillie sur une face radiale interne (17a) de ladite portion de centrage (17), aménagée en tronc de cylindre engagé axialement dans un alésage cylindrique correspondant délimitant partiellement ladite chambre (11), ledit tronc de cylindre étant lui-même en saillie sur une face radiale interne (16a) d'un bouchon cylindrique (15) de plus grand diamètre (16) en appui axial, par sa face radiale interne (16a), contre une butée annulaire (19) du corps (1), autour de l'entrée de ladite chambre (11).

3. Dispositif de dosage selon l'une des revendications 1 et 2, **caractérisé en ce que** ladite fourchette (18) comprend deux dents (18b) sensiblement parallèles l'une à l'autre et engagées dans des parties sensiblement diamétralement opposées de l'évidement, réalisé sous la forme d'une gorge (14) de l'axe (4).

4. Dispositif de dosage selon la revendication 3, **caractérisé en ce que** lesdites dents (18b) de la fourchette (18) sont portées en saillie d'un même côté d'une partie arrondie (18a) sensiblement en demi-cercle de ladite fourchette (18), ladite partie arrondie (18a) étant également engagée dans ladite gorge (14) de l'axe (4).

5. Dispositif de dosage selon l'une quelconque des revendications 1 à 4, **caractérisé en ce que** ladite chambre (11) loge également et au moins partiellement des moyens (9, 12) d'entraînement en rotation de l'organe d'étranglement (3) et de l'axe (4) qui est d'une seule pièce et traverse le conduit (2).

6. Dispositif de dosage selon la revendication 5, **caractérisé en ce que** ledit évidement (14) de l'axe (4) est réalisé sur ladite partie d'extrémité (4a) axialement à l'extérieur d'un secteur denté (12) et d'une butée de rotation (13) portés par l'axe (4) pour coopérer respectivement avec une crémaillère desdits moyens (9) d'entraînement en rotation de l'axe (4) et de l'organe d'étranglement (3), et avec une butée du corps (1), pour limiter la rotation de l'organe d'étranglement (3) en position d'ouverture maximum du conduit (2), la dimension axiale des dents du secteur denté (12) étant telle que lesdites dents restent en prise avec ladite crémaillère tout en permettant une sortie axiale de ladite partie d'extrémité (4a) de l'axe (4) hors de ladite chambre (11) qui est suffisante pour la mise en place de ladite fourchette (18) dans ledit évidement (14) de l'axe (4).

7. Dispositif de dosage selon l'une quelconque des revendications 1 à 6, **caractérisé en ce que** le bouchon (15) est fixé sur le corps (1) par des moyens indémontables, tels que soudage ou déformation de matière, tel que sertissage.

8. Dispositif de dosage selon l'une quelconque des revendications 1 à 6, **caractérisé en ce que** le bouchon (15) est fixé sur le corps (1) par des moyens démontables, tels qu'au moins une oreille radiale du bouchon (15) vissée sur le corps (1).

9. Dispositif de dosage selon l'une quelconque des revendications 1 à 8, **caractérisé en ce que** ledit corps (1) et/ou ledit axe (4) est ou sont moulé(s) d'une seule pièce en une matière de synthèse.

10. Dispositif de dosage selon l'une quelconque des revendications 1 à 9, **caractérisé en ce que** l'axe (4) est monté tourillonnant par son autre partie d'extrémité dans un alésage borgne réalisé dans une partie latérale (6) du corps (1), du côté opposé à la chambre (11) du corps (1).

## Claims

1. Device for metering a flow rate of gas, especially of combustion air supplied to a combustion engine, or of recirculated exhaust gases, of the type comprising a body (1) through which there passes at least one passage (2) in which an approximately disk-shaped throttling member (3) is mounted to rotate with a shaft (4) transverse to said passage (2) and journal-mounted in the body (1) on each side of the passage (2), and an end part (4a) of which is housed in a chamber (11) formed in the body (1) on one side of said passage (2) and opening laterally to the outside of the body (1), said end part (4a) of the shaft (4) having at least one recess (14), delimited by a step or a groove, in which recess there is engaged, substantially tangentially to the shaft (4), at least one tooth (18b) which axially locks the shaft (4) in the body (1), being held in the body (1) by a locking member (18) kept in position in said chamber (11) by means of a plug (15) that closes said chamber (11), **characterized in that** said locking member is a fork (18) of a single piece with each tooth (18b), and said fork (18) and said plug (15) are also of a single piece having a centering portion (17), engaging axially in said chamber (11), and at least one radial part (16a) for bearing against a corresponding axial abutment surface (19) of the body (1) to limit the axial engagement of said centering portion (17) in said chamber (11) in the position in which each tooth of said fork (18) interacts with said recess (14) of the shaft (4) with a small axial clearance allowing the throttling member (3) to rotate freely in the passage (2).

2. Metering device according to claim 1, **characterized in that** said fork (18) projects from an internal radial face (17a) of said centering portion (17), formed as a length of cylinder engaged axially in a corresponding cylindrical bore partially delimiting said chamber (11), said length of cylinder itself projecting from an internal radial face (16a) of a cylindrical plug (15) of larger diameter (16) bearing axially, via its internal radial face (16a), against an annular stop (19) of the body (1), around the entry to said chamber (11).

3. Metering device according to either of claims 1 and 2, **characterized in that** said fork (18) comprises two teeth (18b) substantially parallel to one another and engaged in substantially diametrically opposed parts of the recess, which is produced in the form of a groove (14), of the shaft (4).

4. Metering device according to claim 3, **characterized in that** said teeth (18b) of the fork (18) project from one and the same side of a rounded part (18a), substantially in the shape of a semi-circle, of said fork (18), said rounded part (18a) also being engaged in said groove (14) of the shaft (4).

5. Metering device according to any one of claims 1 to 4, **characterized in that** said chamber (11) also and at least partially houses means (9, 12) of rotating the throttling member (3) and of rotating the shaft (4) which is of a single piece and passes through the passage (2).

6. Metering device according to claim 5, **characterized in that** said recess (14) of the shaft (4) is made on said end part (4a) axially outside a toothed sector (12) and a rotation stop (13) which are borne by the shaft (4) to interact respectively with a rack of said means (9) of rotating the shaft (4) and of rotating the throttling member (3), and with a stop on the body (1), for limiting the rotation of the throttling member (3) in the position in which the passage (2) is wide open, the axial dimension of the teeth of the toothed sector (12) being such that said teeth remain in mesh with said rack while at the same time allowing said end part (4a) of the shaft (4) to be withdrawn axially out of said chamber (11) by far enough for said fork (18) to be fitted into said recess (14) of the shaft (4).

7. Metering device according to any one of claims 1 to 6, **characterized in that** the plug (15) is fixed to the body (1) by nondemountable means, such as by welding or the deformation of material, such as crimping.

8. Metering device according to any one of claims 1 to 6, **characterized in that** the plug (15) is fixed to the body (1) by demountable means, such as at least one radial lug of the plug (15) screwed to the body (1).

9. Metering device according to any one of claims 1 to 8, **characterized in that** said body (1) and/or said shaft (4) is or are molded as a single piece made of synthetic material.

10. Metering device according to any one of claims 1 to 9, **characterized in that** the shaft (4) is journal-mounted via its other end part in a blind bore made in a lateral part (6) of the body (1), on the opposite side to the chamber (11) of the body (1).

## Patentansprüche

1. Vorrichtung für die Dosierung des Durchsatzes von Gasen, insbesondere von Verbrennungsluft für die Versorgung eines Explosionsmotors oder von rückgeführten Auspuffgasen, vom Typ mit einem Körper (1), durch den hindurch mindestens eine Rohrleitung (2) verläuft, in der ein im wesentlichen scheibenförmiges Drosselorgan (3) mit einer Achse (4) drehend gelagert ist, die in Querrichtung zu der Rohrleitung (2) verläuft und beidseitig von der Rohrleitung (2) als Drehzapfen in dem Körper (2) gelagert ist, und von der ein Endabschnitt (4a) in einer Kammer (11) aufgenommen ist, die in dem Körper (1) auf einer Seite der Rohrleitung (2) vorgesehen ist und sich seitlich zur Außenseite des Körpers (1) hin öffnet, wobei der Endabschnitt (4a) der Achse (4) mindestens eine durch eine Schulter oder Auskehlung begrenzte Aussparung (14) aufweist, in die im wesentlichen tangential zur Achse (4) mindestens ein Vorsprung (18b) eingreift, der eine axiale Blockierung der Achse (4) in dem Körper (1) bewirkt, indem er an dem Körper (1) durch ein Blockierorgan (18) gehalten ist, das in der Kammer (11) mit Hilfe eines Deckels (15) zum Verschließen der Kammer (11) positioniert gehalten wird, **dadurch gekennzeichnet, daß** das Blockierorgan ein Gabelflansch (18) ist, der einstückig mit jedem Vorsprung (18b) ausgebildet ist, und der Gabelflansch (18) und der Deckel (15) ebenfalls einstückig miteinander ausgebildet sind und einen Zentrierabschnitt (17) aufweisen, der sich in Axialrichtung in die Kammer (11) einfügt, sowie mindestens einen radialen Abschnitt (16a), der gegen eine entsprechende axiale Anschlagfläche (19) des Körpers (1) anliegt, um den axialen Eingriff des Zentrierabschnitts (17) in der Kammer (11) in der Position des Zusammenwirkens eines jeden Vorsprungs des Gabelflansches (18) in der Aussparung (14) der Achse (4) mit einem geringen axialen Spiel zu begrenzen, welches die freie Drehung des Drosselorgans (3) in der Rohrleitung (2) zuläßt.

2. Dosiervorrichtung nach Anspruch 1, **dadurch gekennzeichnet, daß** der Gabelflansch (18) auf einer radialen Innenfläche (17a) des als zylindrisches Element ausgeführten Zentrierabschnitts (17) vorspringt, der sich in Axialrichtung in eine entsprechende zylindrische Bohrung einfügt, welche die Kammer (11) teilweise begrenzt, wobei das zylindrische Element wiederum auf einer radialen Innenfläche (16a) eines zylindrischen Deckels (15) mit einem größeren Durchmesser (16) vorsteht, der in Axialrichtung mit seiner radialen Innenfläche (16a) gegen einen ringförmigen Anschlag (19) des Körpers (1) um den Eintritt in die Kammer (11) anliegt.

3. Dosiervorrichtung nach einem der Ansprüche 1 oder 2, **dadurch gekennzeichnet, daß** der Gabelflansch (18) zwei zueinander im wesentlichen parallele Vorsprünge (18b) aufweist, die in im wesentlichen diametral entgegengesetzte Abschnitte der als Auskehlung (14) der Achse (4) ausgebildeten Aussparung eingreifen.

4. Dosiervorrichtung nach Anspruch 3, **dadurch gekennzeichnet, daß** die Vorsprünge (18b) des Gabelflansches (18) auf einer gleichen Seite eines im wesentlichen halbkreisförmig gerundeten Abschnitts (18a) des Gabelflansches (18) vorspringend getragen sind, wobei der gerundete Abschnitt (18a) ebenfalls in die Auskehlung (14) der Achse (4) eingreift.

5. Dosiervorrichtung nach einem der Ansprüche 1 bis 4, **dadurch gekennzeichnet, daß** die Kammer (11) des weiteren und zumindest teilweise Mittel (9, 11) zum drehenden Antreiben des Drosselorgans (3) und der Achse (4) aufnimmt, die einstückig ist und die Rohrleitung (2) durchsetzt.

6. Dosiervorrichtung nach Anspruch 5, **dadurch gekennzeichnet, daß** die Aussparung (14) der Achse (4) auf dem Endabschnitt (4a) in Axialrichtung außen von einem Zahnsegment (12) und einem Drehanschlag (13) ausgebildet ist, die von der Achse (4) getragen sind, so daß sie mit einer Zahnstange der Mittel (9) zum drehenden Antreiben der Achse (4) und des Drosselorgans (3) bzw. einem Anschlag des Körpers (1) zum Begrenzen der Drehung des Drosselorgans (3) in der Stellung der maximalen Öffnung der Rohrleitung (2) zusammenwirken, wobei die axiale Abmessung der Zähne des Zahnsegments (12) derart ist, daß die Zähne in Eingriff mit der Zahnstange bleiben und dabei eine axiale Herausverschiebung des Endabschnitts (4a) der Achse (4) aus der Kammer (11) gestatten, die für das Anbringen des Gabelflansches (18) in der Aussparung (14) der Achse (4) ausreichend ist.

7. Dosiervorrichtung nach einem der Ansprüche 1 bis 6, **dadurch gekennzeichnet, daß** der Deckel (15) durch unlösbare Mittel wie Verschweißen oder durch Materialverformung, wie etwa Bördeln, an dem Körper (1) befestigt ist.

8. Dosiervorrichtung nach einem der Ansprüche 1 bis 6, **dadurch gekennzeichnet, daß** der Deckel (15) durch lösbare Mittel wie etwa mindestens eine am Körper (1) festgeschraubte, radiale Öse des Deckels (15) an dem Körper (1) befestigt ist.

9. Dosiervorrichtung nach einem der Ansprüche 1 bis 8, **dadurch gekennzeichnet, daß** der Körper (1) und/oder die Achse (4) einstückig aus einem Kunststoffmaterial geformt ist/sind.

10. Dosiervorrichtung nach einem der Ansprüche 1 bis 9, **dadurch gekennzeichnet, daß** die Achse (4) mit ihrem anderen Endabschnitt als Drehzapfen in einer Blindbohrung gelagert ist, die in einem Seitenabschnitt (6) des Körpers (1) auf der zur Kammer (11) entgegen-gesetzen Seite des Körpers (1) ausgeführt ist.
